Europäisches Patentamt

(19)　European Patent Office

Office européen des brevets

(11)　**EP 1 589 283 B1**

(12)　**EUROPEAN PATENT SPECIFICATION**

(45)　Date of publication and mention
of the grant of the patent:
**16.08.2006  Bulletin 2006/33**

(51)　Int Cl.:
*F23G 5/50* (2006.01)

(21)　Application number: **04405248.8**

(22)　Date of filing: **23.04.2004**

(54)　**Model and control of a waste combustion process**

Modell und Regelung eines Müllverbrennungsverfahrens

Modèle et régulation d'un procédé d'incinération de déchets

(84)　Designated Contracting States:
**AT BE BG CH CY CZ DE DK EE ES FI FR GB GR
HU IE IT LI LU MC NL PL PT RO SE SI SK TR**

(43)　Date of publication of application:
**26.10.2005  Bulletin 2005/43**

(73)　Proprietor: **ABB RESEARCH LTD.
8050 Zürich (CH)**

(72)　Inventors:
　• **Stothert, Alec
　　5408 Ennetbaden (CH)**

　• **Gallestey, Eduardo Alvarez
　　5522 Tägerig (CH)**
　• **Bardi, Silvia
　　5400 Baden (CH)**

(74)　Representative: **ABB Patent Attorneys
c/o ABB Schweiz AG,
Intellectual Property (CH-LC/IP),
Brown Boveri Strasse 6
5400 Baden (CH)**

(56)　References cited:
**EP-A- 1 382 905　　　　WO-A-02/09740
US-A- 5 606 924　　　　US-B1- 6 644 222**

**Description**

FIELD OF THE INVENTION

The invention relates to the field of waste combustion and incineration. It departs from a method of controlling a waste combustion process in a waste incineration plant as well as a device for controlling a waste incineration plant and a device for simulating a waste combustion process as described in the preamble of claims 1, 9 and 10 respectively.
Such a method of controlling a waste incineration plant, a device for controlling a waste incineration plant and a device for simulating a waste combustion process is known from EP 1 382 905 A.

BACKGROUND OF THE INVENTION

Municipal and industrial waste is treated in waste incineration plants in order to reduce the volume of the waste to be deposited and in order to transform environmentally hazardous components of the waste, such as aromatic hydrocarbons or organic solvents, into harmless compounds. The increasing amount of waste to be treated leads to the design of incineration plants with multiple tracks, which are able to incinerate several ten tons of waste per hour. So-called waste-to-energy plants do not just burn the waste to ashes, they also convert the combustion heat into steam, e.g. for district heating, and/or electricity and thus improve the overall efficiency of the plant.
The sophisticated installations for flue gas and ash treatment as well as energy conversion increase the complexity of the plants and hence the need for a suitable control technique. However, due to the complex chemical processes and the unsteady fuel qualities, there are no adequate control techniques available so far to supplant an experienced operator. In addition, the sensor data available are not measured directly at the relevant locations in the furnace, thus resulting e.g. in a delay of several ten seconds before a change in a control parameter will be recorded by a sensor.
A key problem in commissioning and operating a waste incineration plant is the variability of the waste composition, resulting in fluctuations in combustion temperature and flue gas composition and flow. In particular, the heating value or the moisture content of the waste, or the amount of items such as sand or gravel or non-combustible materials such as metals may vary considerably within the waste.
The most significant control parameters which can be used to influence the combustion process in waste incineration plants are the mass flows of primary and secondary combustion air, the air temperature (if a pre-heater for the combustion air is available), the amount of returned flue gas, the amount of waste or fuel fed and the transportation speed or the stoking speed of a reciprocating grate. These parameters have to be optimized according to expected and unexpected variations in water content and heating value of the waste, with the objective to maximize the amount of waste that can be treated and/or to minimize the amount of air pollutant emissions. Another objective is to limit the amount of carbon in the remaining ashes beneath certain limits given by environmental laws or to limit the flame temperature inside the furnace in order to protect the wall bricks and hence extend their lifetime.
According to the patent US 5,606,924, the combustion process may be regulated in response to a temperature distribution of the fuel mass determined by an infrared camera, the oxygen content detected in the flue gas, or a generated mass flow of steam. In order to improve the adaptation of the furnace performance to the steam output requirement, and to influence the composition of the exhaust gas, the patent suggests to detect a three-distribution of the fuel mass on at least a part of the grate. The fuel mass contour is scanned by radar or by directing a plurality of video cameras on the fuel mass at different angles, and the amount of energy locally released by combustion in individual zones is deduced.
In the patent US 6,644,222 B1, a system for continuous thermal combustion of waste is disclosed, including a controller which generates a control signal proportional to a difference between a target and an actual value of e.g. the amount of steam generated, and acting on the magnitude of the supply stream and/or the flow of combustion air. The system further comprises a protective circuit influencing the target value in order to prevent a certain type of malfunction related to low values of the heating value of the fuel.
Model predictive control (MPC) is a procedure of solving an optimal-control problem, which includes system dynamics and constraints on the system output and/or state variables. A system or process model valid at least around a certain operating point allows to express a manipulated system trajectory or sequence of output signals $y$ in terms of a present state of the system, forecasts of external variables and future control signals $u$. A cost or objective function involving the trajectory or output signals $y$ is optimized according to some pre-specified criterion and over some prediction horizon. An optimum first or next control signal $u_1$ resulting from the optimization is then applied to the system, and based on the subsequently observed state of the system and updated external variables, the optimization procedure is repeated.

DESCRIPTION OF THE INVENTION

It is an objective of the invention to control a waste incineration plant or to simulate a combustion process in a way which is at the same time both accurate and of limited computational complexity. These objectives are achieved by a method and device for controlling a waste incineration plant according to claims 1 and 9, as well as a device for simulating a waste combustion process according to claim 10. Further preferred embodiments are evident from the dependent patent claims.

It is the merit of the present invention to create a model of a waste incineration process which is accurate enough to reliably reproduce the major characteristics of the process, but too detailed to prohibit its application in real-time controllers or simulation tools. The model identifies suitable model inputs, model states and model outputs, integrates the main aspects of the different physical, thermodynamic and chemical processes by translating them into state or output equations, and approximates a pile of waste via an upper and a lower layer, of which the homogeneous or uniform properties in turn represent model states.

In a first preferred embodiment of the invention, a heat transfer between a flame resulting from a gaseous combustion above the grate and the waste bed is limited to a heat radiation-type interaction between the flame and the upper layer. The latter than relays the heat to the lower layer via heat conduction. In a further preferred variant of the invention, the top or upper layer is assumed to have a finite heat capacity but no mass.

Preferably, model states corresponding to physical quantities like the flow of waste or the mass of waste in a pile are vectors, the components of which are restricted to the main constituents water, char or combustibles, volatiles and inert material, whereas those model states corresponding to a flow of gas are vectors with components oxygen, inert gas, fuel or gaseous combustibles, and vapour. No detailed knowledge about the chemical properties of the various constituents however is required.

As a model parameter of the underlying combustion process, the thermal inertia as a physical quantity corresponding to the mathematical product of a mass and a specific heat particularly well suited. This is because, for instance, both the mass and specific heat of the upper or top layer of the pile as well as of the flame or gaseous combustion volume above the grate are difficult to estimate. The respective thermal inertias hence are preferably used as model parameters and determined via standard tuning procedures based on plant-specific data.

In the inventive method or device for controlling a waste incineration plant, the generation of a control signal involves preferably a linear model or a linearized version of a more complex model of the waste combustion process taking place in said plant. A so-called robust controller or a Model Predictive Control (MPC) scheme based on at least one model output of said linear model are employed for model-based controlling.

The control procedure according to a preferred embodiment is capable of incorporating variations in the waste composition or deviations from a plant-specific standard combustion fuel type via a filtered white noise signal. The latter is added to the control signals and fed to a linear model of the process. The parameters of the noise filter may be obtained by evaluating known control signals and corresponding system output signals from past measurements.

The model of the waste combustion process representing the core of the invention is most beneficially implemented in a waste incineration plant controller. The latter can assist an operator in maintaining constant process conditions, in maximizing the throughput of the plant at constant energy output or in limiting the use of auxiliary burners for maintaining the combustion process, while at the same time offering robustness with respect to variations in the waste composition. In another aspect of the invention, the model is implemented in a simulation device, allowing the simulation of both the waste combustion process or the entire incineration plant. Thus a training simulator can be realized to educate operators in running a waste to energy plant in a secure, reliable and efficient way.

For the sake of clarity it is to be understood that the recitation of an upper and a lower layer in the pile of waste does in no way exclude a waste model comprising further layers, arranged on either side of or in between the aforementioned two layers, from the scope of protection. Likewise, the scope of protection is not intended to be limited to the methods and devices listed, but is expected to cover the corresponding computer programs as well.

BRIEF DESCRIPTION OF THE DRAWINGS

The subject matter of the invention will be explained in more detail in the following text with reference to preferred exemplary embodiments which are illustrated in the attached drawings, in which:

Fig.1 schematically shows a waste incineration plant,
Fig.2 depicts the components of a model of a waste combustion process,
Fig.3 shows simulation results obtained with the model according to the invention, and
Fig.4 illustrates a linearized procedure for control purposes.

The reference symbols used in the drawings, and their meanings, are listed in summary form in the list of reference symbols. In principle, identical parts are provided with the same reference symbols in the figures.

**EP 1 589 283 B1**

DETAILED DESCRIPTION OF PREFERRED EMBODIMENTS

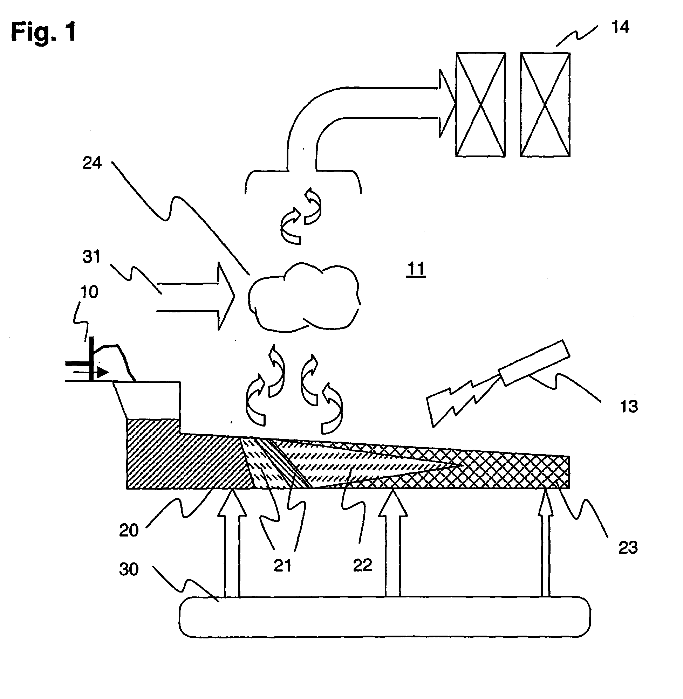

Fig. 1 schematically shows a waste incineration plant with the following basic components. An input feed mechanism or actuator (10) introduces the municipal or industrial waste, garbage or other debris into a furnace (11) and places the former on a supported movable grate (12), thereby forming a waste bed. The grate (12) generally comprises some oppositely moving grate plates for effecting a spreading, mixing and general advance of the waste over the grate (12). Auxiliary burners (13) may be provided in order to start or support the combustion processes. The combusted flue gases are collected in a funnel and guided to a boiler (14) for heating steam.

Without loss of generality, the incineration process is divided into four zones to be serially traversed by the waste: Drying zone (20), first combustion zone for pyrolysis and gasification/volatilization (21), residual zone for char oxidation or solid combustion (22), and ash treatment/sintering zone (23). These zones are actually not very well separated in the furnace and can overlap to a certain extent. A second combustion zone or flame zone (24), where the homogeneous gas phase combustion of the pyrolysis gases takes place, is identified above the waste bed. Primary air (30) is fed from below the grate in generally different amounts to the four abovementioned zones (20, 21, 22, 23). Secondary air (31) is fed above the grate to ensure complete combustion of the gasification and pyrolysis products in the second combustion zone (24).

The quantity of "waste" under consideration in the following model corresponds to an imaginary sector of the physical waste bed on the grate and is termed a "*pile*". In order to account for an inhomogeneity in a vertical direction, i.e. perpendicular to the grate, the pile is separated in a thin upper or top layer and at least one massive lower or waste layer. All layers are assumed homogeneous, and their respective properties will be distinguished by the indices "u" for the upper and "w" for the at least one lower or waste layer. The width of the pile generally is assumed to coincide with the grate width, and a plurality of piles arranged one next to the other may approximate an entire waste bed. As the primary air flow (index "p" in the following) traverses a certain pile from below the grate, it heats up, picks up water vapour and pyrolysis gases and thus becomes a so-called waste gas flow (index "g"). The combustible components of the waste gas flow, generally referred to as "fuels", are combusted in the second combustion zone (24), and a flue gas flow (index "f") finally leaves towards the boiler (14).

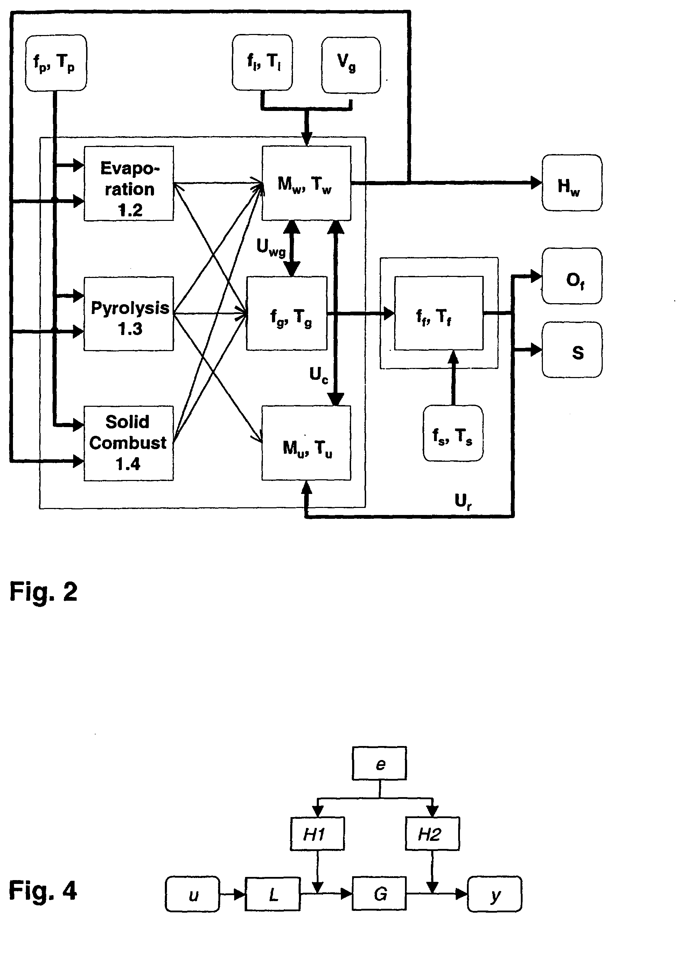

In Fig.2, various components of a waste combustion model according to the invention are indicated. Three basic processes termed evaporation (1.2), pyrolysis (1.3) and solid combustion (1.4) are distinguished and characterized each by the appropriate chemical and/or thermodynamic equations. The latter have been evaluated and translated into a form as indicated under "implementation" in the preferred embodiment of the model at the end of the description below. According to the waste composition and the combustion air feed, and roughly corresponding to the position of the waste on the grate, one of these processes predominantly takes place in the pile. Two layers of the pile of waste are characterized through the temperature $T_u$, $T_w$ and mass $M_u$, $M_w$. The latter are vectors and their components correspond to the respective amounts of water, char or solid combustibles, volatiles, and inert material that make up the layer. The primary air on the other hand is characterized through the primary air temperature $T_p$ and the flow rate $f_p$ of its four main components oxygen, inert gas, fuel, and vapour. Accordingly, the flow rate $f_p$ likewise takes the form of a vector.

Both the flow rate $f_p$ and the temperature $T_p$ of the primary air represent parameters of the incineration plant used for controlling the waste combustion process. Other parameters of this kind are e.g. the waste feed rate $f_{wi}$ of the waste at the input of the furnace (11), the grate velocity $v_G$, or the secondary air characterized through the secondary air temperature $T_s$ and flow rate $f_s$. On the other hand, the temperature $T_{wi}$ and the composition of the waste the input, i.e. the relative amounts of the components water, char, volatiles, and inert material, as well as the composition of the primary and secondary air, i.e. the relative amounts of the components oxygen, inert gas, fuel and vapour, are generally not amenable regulation or controlling purposes.

The height of the waste pile $H_w$, the oxygen fraction in the flue gas $O_f$ and the steam production $S$ represent target parameters of the incineration plant, and any controlling attempt ultimately aims at bringing their values as close as possible to some target value or set point. Hence, in order to determine the aforementioned parameters as model outputs, additional components of the waste combustion model describe the mechanical behavior of the waste on the grate, the thermodynamic conditions and interactions with the water/steam cycle as well as the connected flue gas and ash treatment procedures.

As the dynamics of the gas-phase processes are much faster than the thermodynamics of the solid waste in the pile, the waste combustion model assumes that the gas mass balance and the gas heat balance are in equilibrium and that a steady-state gas flow develops in the second combustion zone (24) or flame. In a hypothetical combustion chamber of a particular volume corresponding to the second combustion zone (24), no accumulation of gas and/or increase in pressure is considered. The draining of the flue gas towards the downstream funnel is neither obstructed nor accelerated by a pressure gradient between the flame and the funnel, and the flue gas flow $f_f$ does not mix with the flow of the waste gas $f_g$ and the flow of the secondary air $f_s$ entering the second combustion zone (24).

In both the solid and the gas basic combustion processes (1.4, 1.5), depending on the relative incoming flows either all the solid or gaseous fuels or the total amount of oxygen available is consumed. In order to determine the

4

relative consumption of fuel and oxygen, the stoichiometric details about the underlying chemical processes are exploited. The reaction rate of the solid combustion therefore might be limited to a value corresponding to an oxygen content in the waste gas flow $f_g$ equal to zero.

According to the invention, the waste combustion model is kept simple by assuming that only the upper layer of the pile is exposed to the heat radiation from the gas phase combustion of the pyrolysis gases in the second combustion zone (24). Correspondingly, heat transfer from the flame to the lower layer exclusively takes place via heat conduction from the upper layer. The respective interactions between the various components of the model are indicated through the arrows in Fig.2. Details of a preferred embodiment of the model are given at the end of the description below.

Furthermore, the upper layer may be assumed to have no mass, i.e. $M_u = 0$, and to be arbitrarily thin, but nevertheless comprising a fixed finite thermal inertia. In this case, the lower layer comprises the complete waste mass. Said finite thermal inertia of the upper layer, as well as the thermal inertia of the flame or gas mass in the second combustion zone (24), are tunable parameters of the waste combustion model. Their exact values are adapted to the specific waste incineration plant which the model is supposed to describe via standard parameter estimation procedures.

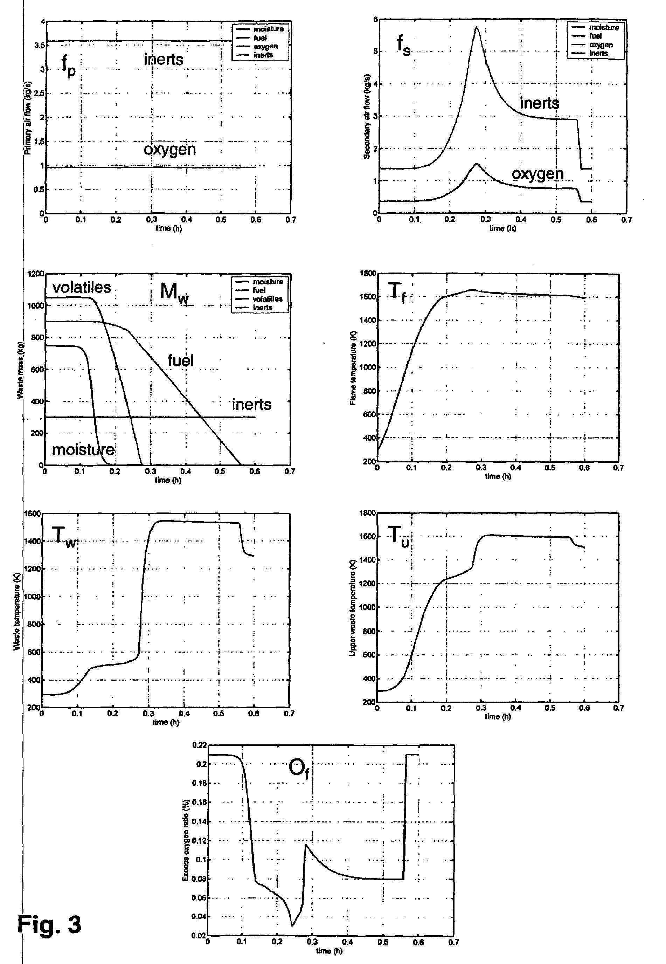

In Fig.3 are displayed various simulation results obtained from a complete combustion process of a single pile of waste of standard composition and weighting several tons and according to the invention. The individual graphs show the temporal evolution during a period of 0.6 hours of the primary air flow $f_p$ and the secondary air flow $f_s$, both comprising only inert components and oxygen (in kg/s), as well as the four components of the waste mass $M_w$ (in kg). At time 0.14 hours, the volatile components of the waste start to combust, and the secondary air flow $f_s$ is gradually increased by a control action aiming at regulating the excess oxygen ration to 8%. As the excess oxygen ratio $O_f$ correlates with the flame temperature $T_f$, the former is used to control the latter and thus to ensure an optimal combustion temperature. Further, the resulting evolution of the state variables bulk waste temperature $T_w$, upper layer temperature $T_u$ and flame temperature $T_f$ (all in K) are traced. Finally, the excess oxygen ratio $O_f$ as one of the model outputs is depicted.

The model of the waste incineration process as detailed above is sufficiently elaborate to account qualitatively for the correct physical mechanisms, but not too complex to prohibit its implementation in a system for real-time controlling a waste incineration plant. With the process model as identified, the combustion process is controlled using a well known model-based technique. Suitable model based controllers are e.g. so-called robust control, an internal model principle or model predictive control (MPC), wherein the choice of the preferred controller may depend on the particular model employed.

An important extension resides in the incorporation of a realistic variation in the waste composition. To that purpose, the above model is linearized, and the waste variation is included as a noise source that multiplies the input waste feed rate $f_{wi}$. Hence, the relative input waste composition can be fixed, corresponding to e.g. a nominal type of waste composition with 30% of water, all deviations therefrom being accounted for by the noise In addition, as the material properties of the solid waste and the waste gas are consolidated in the respective specific heat capacity vectors $C_{pw}$ and $C_{pg}$, there is no need to know the exact chemical composition of the pyrolysis gases either. Equally, an output noise may be superposed to the output values $(S, O_f)$ of the linearized model.

In more detail and as depicted in Fig.4, the extended model takes the form

$$y = (H_2 + GH_1) \cdot e + GL \cdot u \qquad\qquad (\text{eq.1}),$$

where $u$ is the vector of process inputs (corresponding to waste feed rate, grate velocity, primary and secondary air flows), $y$ is the vector of process outputs (oxygen ratio, steam production), and $G$ and $L$ are transfer function matrices characterizing the linearized model. Both the actuator model $L$ describing the waste input process and yielding the actual feed rate $f_{wi}$ and the combustion model $G$ are fixed, whereas the transfer function matrices $H_1$ and $H_2$ characterizing the effect of the noise are parameterized. E is a white noise source, being filtered by matrices $H_1$, $H_2$. All four matrices are derived from the linearization of the model described above.

In order to identify the parameters of the matrices $H_1$ and $H_2$, measured values of u and y are employed for minimizing a prediction error. If $H_1$ is parameterized by p and $H_2$ by q, an optimization problem of the following form must be solved

$$\min \arg_{[p,q]} \left\| \tilde{y} - ((H_2(q) + GH_1(p)) \cdot \tilde{e} + GL \cdot \tilde{u} \right\| \qquad (\text{eq.2}),$$

where $\tilde{y}$ and $\tilde{u}$ are the measured output and input vectors over a given time horizon. Eq.2 could be solved directly using commercial optimization software or, and this is preferred, transferred into an extended Kalman Filter problem. The measured values $\tilde{y}$ and $\tilde{u}$ may be derived from closed loop operation of an existing plant. Computational complexity of the parameter estimation does not jeopardize the applicability of the model in a controller, as the parameter estimation is executed prior to or off-line during any normal operation of the controller. Hence, an update of the parameters may be initiated whenever new measured values are available or an important change in the system behaviour is suspected.

The control system according to the invention being one element in a supervisory control chain, its set points (i.e. the target oxygen ratio $O_F$ in the flue gas or the steam production $S$) may be computed by a hierarchically superior external control loop. The latter may include PID controllers, adaptive control techniques, fuzzy/expert controllers, controllers based on neural networks or other model based controllers.

In the following, a preferred embodiment of the waste incineration model based on a mass free upper layer is given.

*Model inputs*

| | |
|---|---|
| $f_{wi} \in \mathfrak{R}^4, T_{wi}$ | Waste feed rate (water, char, volatiles, inert material) and temperature |
| $f_p \in \mathfrak{R}^4, T_p$ | Primary air flow (oxygen, inert gas, fuel, vapour) and temperature |
| $f_s \in \mathfrak{R}^4, T_s$ | Secondary air flow (oxygen, inert gas, fuel, vapour) and temperature |
| $v_g$ | Grate velocity |
| $Q$ | energy input to gas flame via auxiliary burners |

*Model states* (as many collections as piles in the grate, except $T_f$, which exists only once)

| | |
|---|---|
| $M_w \in \mathfrak{R}^4$ | Waste mass with components, water, char, volatiles, inert material |
| $T_w, T_u, T_f \in \mathfrak{R}$ | Lower pile, upper pile and flame or flue gas temperature |

*Model outputs*

| | |
|---|---|
| $f_g, f_f \in \mathfrak{R}^4$ | Waste and flue gas with components oxygen, inert gas, fuel, vapour. |
| $T_g, T_f \in \mathfrak{R}$ | Waste gas temperature, and flue gas or flame temperature. |
| $H_w \in \mathfrak{R}$ | Height of waste pile |
| $O_f \in \mathfrak{R}$ | Oxygen fraction in flue gas |
| $S \in \mathfrak{R}$ | Steam production |

*Additional variables/functions*

| | |
|---|---|
| $k_h \in \mathfrak{R}^{1 \times 4}$ | Pile height conversion |
| $k_v \in \mathfrak{R}$ | Waste transportation factor (for adjusting physical units) |
| $C_{pw} \in \mathfrak{R}^{1 \times 4}$ | Waste specific heat capacity |

**EP 1 589 283 B1**

(continued)

$C_{pp} \in \Re^{1 \times 4}$     Primary air specific heat capacity

$C_{ps} \in \Re^{1 \times 4}$     Secondary air specific heat capacity

$C_{pg} \in \Re^{1 \times 4}$     Waste gas specific heat capacity

$C_{pf} \in \Re^{1 \times 4}$     Flue gas specific heat capacity

$k_{pg} \in \Re^{1 \times 4}$     Waste gas ideal gas law pressure constant

$k_{pf} \in \Re^{1 \times 4}$     Flue gas ideal gas law pressure constant

_State equations_ (for the above model states)

$$\dot{M}_w = f_{wi} - v_g \cdot k_v \cdot M_w - E_{mw} - P_{mw} - C_{mw}$$

$$C_{pw} \cdot M_w \cdot \dot{T}_w = C_{pw} \cdot f_{wi} \cdot T_{wi} - C_{pw} \cdot \dot{M}_w \cdot T_w - v_g \cdot k_v \cdot C_{pw} \cdot M_w \cdot T_w - E_Q - P_Q + C_Q + U_c + U_{wg}$$

$$Upper\ Layer\ Thermal\ Inertia \cdot \dot{T}_u = U_r - U_c$$

$$Flame\ Thermal\ Inertia \cdot \dot{T}_f = (C_{pg} \cdot f_g \cdot T_g + C_{ps} \cdot f_s \cdot T_s - C_{pf} \cdot f_f \cdot T_f + G_Q - U_r + Q)$$

_Output equations_

$$f_c = E_{mg} + P_{mg} + C_{mg}$$

$$f_g = f_p + f_c$$

$$T_g = (C_{pp} f_p T_p + (C_{pg} f_c + k_{wg}) T_w) / (C_{pg} f_g + k_{wg})$$

$$H_w = k_h \cdot M_w$$

$$f_{gf} = f_g + f_s$$

$$T_{gf} = (C_{pg} f_g T_g + C_{ps} f_s T_s)/(C_{pg} f_g + C_{ps} f_s)$$

(mixed temp prior to ignition)

$$f_f = f_{gf} + G_{mg}$$

$$S = S(f_f, T_f)$$

computes steam produced according to the boiler model used.

$$O_f = \frac{[1 \ 0 \ 0 \ 0] \cdot f_f}{[1 \ 1 \ 1 \ 1] \cdot f_f}$$

Basic *Process models*

1.1 Heat transfer between solid waste and waste gas

*Basic Description*

$$U|_{wg} : T_w \times T_g \rightarrow \Re$$

*Additional parameters*

$$k|_{wg} \in \Re$$

*Implementation*

$$U|_{wg} = k_{wg} (T_w - T_g)$$

### 1.2 Evaporation

*Basic description*

$$E_m : M_w \times T_w \times f_p \times T_p \to \mathfrak{R} \qquad \text{Mass evaporation function}$$

$$E_Q : M_w \times T_w \times f_p \times T_p \to \mathfrak{R} \qquad \text{Heat of evaporation}$$

*Additional parameters*

$$P_{p\text{-}H2Owaste} : T_w \to \mathfrak{R} \qquad \text{Vapour pressure of water in waste}$$

$$P_{p\text{-}H2Ogas} : f_p \times T_p \to \mathfrak{R} \qquad \text{Partial pressure of water in gas}$$

$$k_{evap} \in \mathfrak{R} \qquad \text{Evaporation rate constant}$$

$$k_{latent} \in \mathfrak{R} \qquad \text{Latent heat of evaporation}$$

*Implementation*

$$P_{p-H2Ogas} = \frac{[0 \quad 0 \quad 0 \quad 1] \cdot f_p}{[1 \quad 1 \quad 1 \quad 1] \cdot f_p} \cdot \left( k_{pg}{}^T \cdot f_p \cdot T_p \right)$$

$$C_{water} = \frac{[1 \quad 0 \quad 0 \quad 0] \cdot M_w}{[1 \quad 1 \quad 1 \quad 1] \cdot M_w}$$

$$P_{p-H2Owaste} = PvsA \exp\left(\frac{PvsB\,(T_w - 273)}{T_w}\right)$$

$$E_m = k_{evap}\left(P_{p-H2Owaste} - P_{p-H2Ogas}\right) \cdot C_{water}$$

$$E_{mw} = E_{mg} = E_m \cdot E_m Fractions$$

$$E_m Fractions = [0\,0\,0\,1]^T$$

$$E_Q = k_{latent} \cdot E_m$$

## 1.1 Pyrolysis

*Basic description*

$$P_m : M_w \times T_w \rightarrow \Re \quad \text{Mass pyrolysed}$$
$$P_Q : M_w \times T_w \rightarrow \Re \quad \text{Heat of pyrolysis}$$

*Additional parameters*

$A$      Pyrolysis pre-exponential
$E_a$      Pyrolysis activation energy
$k_{pyro}$      Pyrolysis mass transfer coeffcient
$k_{energy}$      Heat required to perform pyrolysis

*Implementation*

$$P_m = k_{pyro} A e^{-E_a / R / T_w} \cdot [0 \quad 0 \quad 1 \quad 0] \cdot M_w$$

$$P_{mw} = P_m \cdot P_{mw} Fractions, \quad P_{mg} = P_m \cdot P_{mg} Fractions,$$

$$P_{mw} Fractions, P_{mg} Fractions \in \Re^4$$

$$P_Q = k_{energy} \cdot P_m$$

## 1.4 Solid combustion

*Basic description*

$$C_m : M_w \times T_w \times f_p \rightarrow \Re \quad \text{Waste mass combusted}$$
$$C_Q : M_w \times T_w \times f_p \rightarrow \Re \quad \text{Heat of waste combustion}$$

*Additional parameters*

**EP 1 589 283 B1**

| | |
|---|---|
| $A$ | Combustion pre-exponential |
| $E_a$ | Combustion activation energy |
| $k_{wcomb}$ | Waste combustion transfer coefficient |
| $k_{energy}$ | Heat from combustion |
| $P_{p-O2}$ | Partial pressure of oxygen in gas |

*Implementation*

$$P_{p-O2} = \begin{bmatrix} 1 & 0 & 0 & 0 \end{bmatrix} \cdot \left( \frac{f_p}{\begin{bmatrix} 1 & 1 & 1 & 1 \end{bmatrix} \cdot f_p} \right)$$

$$\dot{C}_m = k_{wcomb}\, P_{p-O2} \cdot Ae^{-E_a/R/T_w} \cdot \begin{bmatrix} 0 & 1 & 0 & 0 \end{bmatrix} \cdot M_w$$

$$\dot{C}_{mw} = C_m \cdot C_{mw} Fractions, \quad C_{mg} = C_m \cdot C_{mg} Fractions,$$

$$\dot{C}_{mw} Fractions, C_{mg} Fractions \in \mathfrak{R}^4$$

$$\dot{C}_Q = k_{energy} \cdot C_m$$

If there is not enough oxygen in the primary air for this combustion rate to take place completely (c.f. equation for $f_g$), this term is limited to be the maximum possible amount, i.e. so as to obtain oxygen in $f_g$ equals to zero.

1.5 Gas combustion (Flame)

*Basic description*

$$G_m : f_{gf} \times T_{gf} \rightarrow \mathfrak{R} \quad \text{Gas mass combusted}$$

$$G_Q : f_{gf} \times T_{gf} \rightarrow \mathfrak{R} \quad \text{Heat of gas combustion}$$

*Additional parameters*

| | |
|---|---|
| $A$ | Combustion pre-exponential |
| $E_a$ | Combustion activation energy |
| $k_{gcomb}$ | Gas combustion transfer coefficient |
| $k_{energy}$ | Heat from combustion |
| $P_{p-O2}$ | Partial pressure of oxygen in gas |

*Implementation*

$$P_{p-O2} = \begin{bmatrix} 1 & 0 & 0 & 0 \end{bmatrix} \cdot \left( \frac{f_{gf}}{\begin{bmatrix} 1 & 1 & 1 & 1 \end{bmatrix} \cdot f_{gf}} \right)$$

$$G_m = k_{gcomb}\, P_{p-O2} \cdot Ae^{-E_a/R/T_{gf}} \cdot \begin{bmatrix} 0 & 1 & 0 & 0 \end{bmatrix} \cdot f_{gf}$$

$$G_{mg} = G_m \cdot G_{mg}\, Fraction, \quad G_{mg}\, Fractions \in \Re^4$$

$$G_Q = k_{energy} \cdot G_m$$

As in the case of waste combustion, the reaction rate $G_m$ might not be feasible due to the lack of oxygen, or gaseous fuel in $f_g$, see expression for $f_f$. If this is the case the reaction rate is reduced to the maximum possible.

1.6 Upper layer heat transfer

*Basic description*

$U_r : T_u \times T_f \rightarrow \Re$      Heat radiation from flame to waste upper layer

$U_c : T_u \times T_w \rightarrow \Re$      Heat conduction from waste upper layer to waste lower layer

*Additional parameters*

$k_{rad} \in \Re$      Heat transfer coefficient from waste upper layer to gas flame

$k_{cond} \in \Re$      Heat transfer coefficient from waste upper layer to waste pile

*Implementation*

$$U_r = k_{rad}\,(T_f^4 - T_u^4)$$

$$U_c = k_{cond}\,(T_u - T_w)$$

LIST OF DESIGNATIONS

10      actuator

11      furnace

12      grate

13      auxiliary burner

14      boiler

20      drying zone

21      first combustion zone

22      residual zone

23      ash treatment zone

24      second combustion zone

30      primary air

31      secondary air

**Claims**

1.  A method of controlling a waste incineration plant by generating control signals ($u$) in response to measured target parameters ($y$) of a waste combustion process in the waste incineration plant, wherein the generation of the control signals ($u$) is based on a model of the waste combustion process involving

    - model inputs $(f_{wi}, T_{wi}; f_p, T_p; f_s, T_s; v_g)$ corresponding to the control signals ($u$), model states ($M_w, T_w; M_u, T_u; T_f$) and model outputs ($f_g, T_g; f_f, T_f; H_w; O_f; S$) corresponding to the target parameters ($y$),
    - state equations linking the model states to the model inputs, and output equations linking the model outputs to the model inputs and model states,

    **characterized in that** the model of the waste combustion process further involves

    - a pile representing a sector of a waste bed and comprising a lower layer and an upper layer, and
    - a homogeneously distributed mass ($M_w$, $M_u$) and a spatially constant temperature ($T_w$, $T_u$) of the lower and the upper layer each forming a model state.

2.  The method according to claim 1, **characterised in that** the model of the waste combustion process further involves

    - a limited number of basic processes (1.1 to 1.6) including a basic heat transfer process between a basic gas combustion process (1.5) representing a flame and the pile being restricted to a basic heat radiation process ($U_r$) between the flame and the upper layer.

3.  The method according to claim 1, **characterized in that** the upper layer is assumed to have no mass and a finite heat capacity.

4.  The method according to claim 1, **characterized in that** the model inputs or states ($f_{wi}$, $M_w$; $M_u$) corresponding to solid matter or the layers of the pile comprise the components water, char, volatiles and inert material, and **in that** the model inputs or outputs ($f_p$, $f_s$, $f_g$, $f_f$) corresponding to gas flows comprise the components oxygen, inert gas, fuel and vapour.

5. The method according to claim 1, **characterized in that** a thermal inertia of the upper layer and a thermal inertia of a flame are parameters of the model of the waste combustion process tuneable to a specific incineration plant.

6. The method according to claim 1, **characterized in that** the model of the waste combustion process is a linear model and the generation of a control signal ($u$) is preferably based on Model Predictive Control (MPC) involving a model output ($H_w$; $O_f$; $S$) of the model of the waste combustion process.

7. The method according to claim 6, **characterized in that** the model of the waste combustion process is based on a standard waste composition and incorporates variations of the waste composition ($f_{wi}$) via a white noise ($e$).

8. The method according to claim 6, **characterized in that** the white noise terms comprise parameterized transfer matrices ($H_1$, $H_2$) which are identified or updated based on recorded control signals ($u$) and measured target parameters ($y$) from the past.

9. A device for controlling a waste incineration plant including means for generating control signals ($u$) in response to measured target parameters ($y$) of a waste combustion process in the waste incineration plant, wherein the generation of the control signals ($u$) is based on a model of the waste combustion process involving

- model inputs ($f_{wi}$, $T_{wi}$; $f_p$, $T_p$; $f_s$, $T_s$; $v_g$) corresponding to the control signals ($u$), model states ($M_w$, $T_w$; $M_u$, $T_u$; $T_f$) and model outputs ($f_g$, $T_g$; $f_f$, $T_f$; $H_w$; $O_f$; $S$) corresponding to the target parameters ($y$),
- state equations linking the model states to the model inputs, and output equations linking the model outputs to the model inputs and model states,

**characterized in that** the model of the waste combustion process further involves

- a pile representing a sector of a waste bed and comprising a lower layer and an upper layer, and
- a homogeneous distribution of matter ($M_w$, $M_u$) and temperature ($T_w$, $T_u$) of each layer forming a model state.

10. A device for simulating a waste combustion process based on a model of the waste combustion process involving

- model inputs ($f_{wi}$, $T_{wi}$; $f_p$, $T_p$; $f_s$, $T_s$; $v_g$), model states ($M_w$, $T_w$; $M_u$, $T_u$; $T_f$) and model outputs ($f_g$, $T_g$; $f_f$, $T_f$; $H_w$; $O_f$; $S$),
- state equations linking the model states to the model inputs, and output equations linking the model outputs to the model inputs and model states,

**characterized in that** the model of the waste combustion process further involves

- a pile representing a sector of a waste bed and comprising a lower layer and an upper layer, and
- a homogeneous distribution of matter ($M_w$, $M_u$) and temperature ($T_w$, $T_u$) of each layer forming a model state.

## Patentansprüche

1. Verfahren zum Steuern einer Müllverbrennungsanlage durch Erzeugen von Steuersignalen (u) in Antwort auf gemessene Zielparameter (y) eines Müllverbrennungsverfahrens in der Müllverbrennungsanlage, wobei die Erzeugung der Steuersignale (u) auf einem Modell des Müllverbrennungsverfahrens basiert, das aufweist

- Modelleingaben ($f_{wi}$, $T_{wi}$; $f_p$, $T_p$; $f_s$, $T_s$; $v_g$), die den Steuersignalen ($u$) entsprechen, Modellzustände ($M_w$, $T_w$; $M_u$, $T_u$; $T_f$) und Modellausgaben ($f_g$, $T_g$; $F_f$, $T_f$; $H_w$; $O_f$; $S$), die den Zielparametern ($y$) entsprechen,
- Zustandsgleichungen, welche die Modellzustände mit den Modelleingaben verbinden, und Ausgabegleichungen, welche die Modellausgaben mit den Modelleingaben und Modellzuständen verbinden,

**dadurch gekennzeichnet, dass** das Modell des Müllverbrennungsverfahrens ferner aufweist

- einen Stapel, der einen Abschnitt eines Müllbetts repräsentiert und eine untere Schicht und eine obere Schicht umfasst, und
- eine homogen verteilte Masse ($M_w$, $M_u$) und eine räumlich konstante Temperatur ($T_w$, $T_u$) der unteren und der oberen Schicht, die jeweils einen Modellzustand bilden.

2. Verfahren nach Anspruch 1, **dadurch gekennzeichnet, dass** das Modell des Müllverbrennungsverfahrens ferner aufweist

- eine begrenzte Anzahl von Grundverfahren (1.1 bis 1.6), die ein Wärmeübertragungs-Grundverfahren zwischen einem Gasverbrennungs-Grundverfahren (1.5), das eine Flamme repräsentiert, und dem Stapel aufweisen, der auf ein Wärmestrahlungs-Grundverfahren ($U_r$) zwischen der Flamme und der oberen Schicht begrenzt ist.

3. Verfahren nach Anspruch 1, **dadurch gekennzeichnet, dass** vorausgesetzt wird, dass die obere Schicht keine Masse und eine begrenzte Wärmekapazität aufweist.

4. Verfahren nach Anspruch 1, **dadurch gekennzeichnet, dass** die Modelleingaben oder -zustände ($f_{wi}$, $M_{wi}$; $M_u$), die Feststoffen entsprechen, oder die Schichten des Stapels die Bestandteile Wasser, Holzkohle, flüchtige Bestandteile und inertes Material umfassen, und **dadurch**, dass die Modelleingaben oder -ausgaben ($f_p$, $f_s$, $f_g$, $f_f$), die Gasströmen entsprechen, die Bestandteile Sauerstoff, inertes Gas, Kraftstoff und Dampf umfassen.

5. Verfahren nach Anspruch 1, **dadurch gekennzeichnet, dass** eine Wärmeträgheit der oberen Schicht und eine Wärmeträgheit einer Flamme Parameter des Modells des Müllverbrennungsverfahrens sind, das auf eine spezifische Verbrennungsanlage abgestimmt werden kann.

6. Verfahren nach Anspruch 1, **dadurch gekennzeichnet, dass** das Modell des Müllverbrennungsverfahrens ein lineares Modell ist und die Erzeugung eines Steuersignals ($u$) vorzugsweise auf einer vorausschauenden Modellsteuerung (MPC) basiert, die eine Modellausgabe ($H_{wi}$; $O_f$; $S$) des Modells des Müllverbrennungsverfahrens aufweist.

7. Verfahren nach Anspruch 6, **dadurch gekennzeichnet, dass** das Modell des Müllverbrennungsverfahrens auf einer standardgemäßen Müllzusammensetzung basiert und Variationen der Müllzusammensetzung ($f_{wi}$) durch ein weißes Rauschen ($e$) aufnimmt.

8. Verfahren nach Anspruch 6, **dadurch gekennzeichnet, dass** die Ausdrücke des weißen Rauschens parameterisierte Übertragungsmatrizen ($H_1$, $H_2$) umfassen, die basierend auf den aufgezeichneten Steuersignalen ($u$) und gemessenen Zielparametern ($y$) aus der Vergangenheit identifiziert oder aktualisiert werden.

9. Vorrichtung zum Steuern einer Müllverbrennungsanlage, die Mittel zum Erzeugen von Steuersignalen ($u$) als Antwort auf gemessene Zielparameter ($y$) eines Müllverbrennungsverfahrens in der Müllverbrennungsanlage aufweist, wobei
die Erzeugung der Steuersignale ($u$) auf einem Modell des Müllverbrennungsverfahrens basiert, das aufweist

- Modelleingaben ($f_{wi}$, $T_{wi}$; $f_p$, $T_p$; $f_s$, $T_s$; $v_g$), die den Steuersignalen (u) entsprechen, Modellzustände ($M_w$, $T_w$; $M_u$, $T_u$; $T_f$) und Modellausgaben ($f_g$, $T_g$; $F_f$, $T_f$; $H_w$; $O_f$; $S$), die den Zielparametern ($y$) entsprechen,
- Zustandsgleichungen, welche die Modellzustände mit den Modelleingaben verbinden, und Ausgabegleichungen, welche die Modellausgaben mit den Modelleingaben und Modellzuständen verbinden,

**dadurch gekennzeichnet, dass** das Modell des Müllverbrennungsverfahrens ferner aufweist

- einen Stapel, der einen Abschnitt eines Müllbetts repräsentiert und eine untere Schicht und eine obere Schicht umfasst, und
- eine homogene Verteilung von Masse ($M_w$, $M_u$) und Temperatur ($T_w$, $T_u$) jeder Schicht, die einen Modellzustand bildet.

10. Vorrichtung zum Simulieren eines Müllverbrennungsverfahrens basierend auf einem Modell des Müllverbrennungsverfahrens, die aufweist

- Modelleingaben ($f_{wi}$, $T_{wi}$; $f_p$, $T_p$; $f_s$, $T_s$; $v_g$), Modellzustände ($M_w$, $T_w$; $M_u$, $T_u$; $T_f$) und Modellausgaben ($f_g$, $T_g$; $f_f$, $T_f$; $H_w$; $O_f$; $S$),
- Zustandsgleichungen, welche die Modellzustände mit den Modelleingaben verbinden, und Ausgabegleichungen, welche die Modellausgaben mit den Modelleingaben und Modellzuständen verbinden,

**dadurch gekennzeichnet, dass** das Modell des Müllverbrennungsverfahrens ferner aufweist

- einen Stapel, der einen Abschnitt eines Müllbetts repräsentiert und eine untere Schicht und eine obere Schicht umfasst, und
- eine homogene Verteilung von Masse $(M_w, M_u)$ und Temperatur $(T_w, T_u)$ jeder Schicht, die einen Modellzustand bildet.

**Revendications**

1. Méthode de régulation d'une installation d'incinération de déchets par production de signaux de régulation ($u$) en réponse à des paramètres cibles mesurés ($y$) d'un procédé de combustion de déchets dans l'installation d'incinération de déchets, dans laquelle
   la production des signaux de régulation ($u$) est basée sur un modèle du procédé de combustion de déchets comprenant

   - des entrées de modèle $(f_{wi}, T_{wi}, f_p, T_p, f_s, T_s, v_g)$ correspondant aux signaux de régulation ($u$), des états de modèle $(M_w, T_w, M_u, T_u, T_f)$ et des sorties de modèle $(f_g, T_g, f_f, T_f, H_w, O_f, S)$ correspondant aux paramètres cibles ($y$),
   - des équations d'état liant les états de modèle aux entrées de modèle, et des équations de sortie liant les sorties de modèle aux entrées de modèle et aux états de modèle,

   **caractérisée en ce que** le modèle du procédé de combustion de déchets comprend en outre

   - une pile représentant un secteur d'un lit de déchets et comprenant une couche inférieure et une couche supérieure, et
   - une masse répartie de façon homogène $(M_w, M_u)$ et une température constante dans l'espace $(T_w, T_u)$ de la couche inférieure et de la couche supérieure formant chacune un état de modèle.

2. Méthode selon la revendication 1, **caractérisée en ce que** le modèle du procédé de combustion de déchets comprend en outre

   - un nombre limité de procédés élémentaires (1.1 à 1.6) intégrant un procédé élémentaire de transfert thermique entre un procédé élémentaire de combustion de gaz (1.5) représentant une flamme et la pile, limité à un procédé élémentaire de rayonnement thermique ($U_r$) entre la flamme et la couche supérieure.

3. Méthode selon la revendication 1, **caractérisée en ce que** l'on suppose que la couche supérieure n'a pas de masse et a une capacité thermique finie.

4. Méthode selon la revendication 1, **caractérisée en ce que** les entrées ou les états de modèle $(f_{wi}, M_w, M_u)$ correspondant à la matière solide ou aux couches de la pile comprennent les composantes eau, matières carbonisées, matières volatiles et matières inertes, et **en ce que** les entrées ou les sorties de modèle ($f_p, f_s, f_g, f_f$) correspondant aux flux de gaz comprennent les composantes oxygène, gaz inerte, combustible et vapeur.

5. Méthode selon la revendication 1, **caractérisée en ce qu'**une inertie thermique de la couche supérieure et une inertie thermique d'une flamme sont des paramètres du modèle du procédé de combustion de déchets qui peuvent être modifiés en fonction d'une installation d'incinération spécifique.

6. Méthode selon la revendication 1, **caractérisée en ce que** le modèle du procédé de combustion de déchets est un modèle linéaire et la production d'un signal de régulation ($u$) est préférablement basée sur une procédure Model Prédictive Control (MPC) comprenant une sortie de modèle ($H_w, O_f, S$) du modèle du procédé de combustion de déchets.

7. Méthode selon la revendication 6, **caractérisée en ce que** le modèle du procédé de combustion de déchets est basé sur une composition de déchets normalisée et intègre des variations de la composition de déchets ($f_{wi}$) via un bruit blanc ($e$).

8. Méthode selon la revendication 6, **caractérisée en ce que** les termes du bruit blanc comprennent des matrices de transfert paramétrées $(H_1, H_2)$ qui sont identifiées ou mises à jour en fonction de signaux de régulation enregistrés ($u$) et de paramètres cibles mesurés ($y$) dans le passé.

9. Dispositif de régulation d'une installation d'incinération de déchets comprenant un moyen de production de signaux de régulation ($u$) en réponse à des paramètres cibles mesurés ($y$) d'un procédé de combustion de déchets dans l'installation d'incinération de déchets, dans lequel la production des signaux de régulation ($u$) est basée sur un modèle du procédé de combustion de déchets comprenant

- des entrées de modèle ($f_{wi}, T_{wi}, f_p, T_p, f_s, T_s, v_g$) correspondant aux signaux de régulation ($u$), des états de modèle ($M_w, T_w, M_u, T_u, T_f$) et des sorties de modèle ($f_g, T_g, f_f, T_f, H_w, O_f, S$) correspondant aux paramètres cibles ($y$),
- des équations d'état liant les états de modèle aux entrées de modèle, et des équations de sortie liant les sorties de modèle aux entrées de modèle et aux états de modèle,

**caractérisé en ce que** le modèle du procédé de combustion de déchets comprend en outre

- une pile représentant un secteur d'un lit de déchets et comprenant une couche inférieure et une couche supérieure, et
- une répartition homogène de la matière ($M_w, M_u$) et de la température ($T_w, T_u$) de chaque couche formant un état de modèle.

10. Dispositif de simulation d'un procédé de combustion de déchets basé sur un modèle du procédé de combustion de déchets comprenant

- des entrées de modèle ($f_{wi}, T_{wi}, fp, Tp, f_s, T_s, v_g$), des états de modèle ($M_w, T_w, M_u, T_u, T_f$), et des sorties de modèle ($f_g, Tg, f_f, T_f, H_w, O_f, S$),
- des équations d'état liant les états de modèle aux entrées de modèle, et des équations de sortie liant les sorties de modèle aux entrées de modèle et aux états de modèle,

**caractérisé en ce que** le modèle du procédé de combustion de déchets comprend en outre

- une pile représentant un secteur d'un lit de déchets et comprenant une couche inférieure et une couche supérieure, et
- une répartition homogène de la matière ($M_w, M_u$) et de la température ($T_w, T_u$) de chaque couche formant un état de modèle.

**Fig. 1**

**Fig. 2**

**Fig. 4**

Fig. 3